# EUROPÄISCHE PATENTSCHRIFT

(11) **EP 4 587 147 B1**
(45) Veröffentlichungstag und Bekanntmachung des Hinweises auf die Patenterteilung: **05.08.2026**
(21) Anmeldenummer: 23772160.0
(22) Anmeldetag: 13.09.2023
(51) Int. Cl.: B01D 27/06, B01D 27/14, B01D 29/21, B01D 29/58

(54) **FILTEREINSATZ MIT VERBESSERTER FILTERLEISTUNG UNTER EINSATZBEDINGUNGEN**
FILTER INSERT WITH IMPROVED FILTER PERFORMANCE UNDER OPERATING CONDITIONS
CARTOUCHE FILTRANTE AVEC PERFORMANCES DE FILTRATION AMÉLIORÉES DANS LES CONDITIONS D'UTILISATION

(30) Priorität: 16.09.2022 DE 102022123809
(43) Veröffentlichungstag der Anmeldung: 23.07.2025
(73) Patentinhaber: Hengst SE, 48147 Münster (DE)
(72) Erfinder: PIETSCHNER, Sieghard, 48268 Greven (DE); PIETRUSCHKA, Sebastian, 48145 Münster (DE); SCHULTE WÜLWER, Tobias, 48147 Münster (DE); WEGMANN, Marcus, 48346 Ostbevern (DE); GAMERSCHLAG, Christiane, 48147 Münster (DE); TEWES, Elisabeth, 48149 Münster (DE)
(74) Vertreter: Pelster Behrends Patentanwälte PartG mbB
(86) Internationale Anmeldenummer: PCT/EP2023/075100
(87) Internationale Veröffentlichungsnummer: WO 2024/056705

(56) Entgegenhaltungen:
- DE-T5- 112011 102 095
- GB-A- 2 308 986
- GB-A- 825 192
- US-A- 5 342 511

## Beschreibung

Die Erfindung betrifft einen Filtereinsatz für eine Fluidfiltereinrichtung sowie eine Fluidfiltereinrichtung umfassend einen entsprechenden Filtereinsatz. Offenbart wird zudem die Verwendung eines entsprechenden Filtereinsatzes beziehungsweise einer Fluidfiltereinrichtung bei der Filterung von Fluiden sowie eine alternative Filtereinheit.

Grundsätzlich besteht in vielen Industriezweigen ein kontinuierlicher Bedarf nach leistungsfähigen Fluidfiltern mit vorteilhaften Handhabungseigenschaften und einer hohen Filtereffizienz. Viele der aus dem Stand der Technik bekannten Verbesserungen dieser Eigenschaften werden durch die Auswahl geeigneter Materialien und/oder durch eine verbesserte Konstruktionsweise der Filter erreicht.

Ein Gebiet der Technik, in dem eine besonders große Nachfrage nach leistungsstarken Filtern besteht, ist der Bereich der Fahrzeugtechnik, in dem entsprechende Fluidfiltereinrichtungen insbesondere für die Filterung von Kraftstoffen, beispielsweise von Benzin oder Diesel, zum Einsatz kommen. Hierbei sollen die eingesetzten Fluidfiltereinrichtungen neben der Abtrennung von partikulären Verunreinigungen in vielen Fällen auch noch weitere Aufgaben erfüllen, beispielsweise bei der Abscheidung von Fremdflüssigkeiten. Entsprechende Fluidfiltereinrichtungen zur Filterung von Kraftstoffen sind dem Fachmann bekannt und beispielsweise in der US 6328883 B1, der US 8034240 B2, der DE 112011102095 T5, der GB 825192 A, der GB 2308986 A, der US 5342511 A oder der US 5643446 A offenbart.

Die Leistungsfähigkeit moderner Fluidfiltereinrichtungen bzw. von deren Filtereinsätzen hinsichtlich des Abscheidegrades und weiterer Eigenschaften wird heutzutage regelmäßig unter kontrollierten Testbedingungen mit zumeist standardisierten Testverfahren mit vergleichsweise statischen Umgebungsbedingungen bestimmt. Viele der aus dem Stand der Technik bekannten Fluidfiltereinrichtungen für Kraftstoffe zeigen unter diesen "Laborbedingungen" vorteilhafte Eigenschaften.

In der Praxis, d.h. insbesondere beim späteren Einsatz im Fahrzeug, wird jedoch in vielen Fällen gefunden, dass die Filtereigenschaften im Fahrbetrieb nicht ausreichend sind, um den von den Fahrzeugherstellern aufgestellten Anforderungen für einen sicheren Betrieb zu genügen. Während der Fokus der Entwicklung zur Kompensation dieses beobachteten Problems in der Vergangenheit zumeist darauf lag, die Ausgangsfiltereigenschaften unter Laborbedingungen noch weiter zu erhöhen, richtet sich der Entwicklungsfokus heutzutage zunehmend darauf, dass stattdessen vielmehr die Robustheit der Fluidfiltereinrichtungen gegen die im Einsatz herrschenden Belastungen erhöht werden sollte, so dass die Ausgangsfiltereigenschaften durch die im Betrieb auftretenden Belastungen eine möglichst geringe Verschlechterung erfahren sollten.

Nach Einschätzung der Erfinder gehören zu den wesentlichen Belastungen, die ein Kraftstofffilter unter Einsatzbedingungen in einem Fahrzeug, insbesondere in einem Nutzfahrzeug, erfährt, insbesondere mechanische Vibrationen der Fluidfiltereinrichtungen, die beispielsweise durch die Fahrt auf der Fahrbahn oder den Betrieb des Motors verursacht werden, und Fluktuationen in den durch die Fluidfiltereinrichtungen fließenden Fluidströmen, die beispielsweise durch das An- und Abschalten des Motors oder durch eine variierende Treibstoffzufuhr zum Motor bedingt werden. Nach Einschätzung der Erfinder sind die meisten der aus dem Stand der Technik bekannten Fluidfiltereinrichtungen hinsichtlich dieser unter Einsatzbedingungen in einem Fahrzeug auftretenden Belastungen nicht ausreichend robust, so dass die Filterleistung unter Einsatzbedingungen als unzureichend bewertet wird.

Die primäre Aufgabe der vorliegenden Erfindung war es, die vorstehend beschriebenen Nachteile des Standes der Technik auszuräumen oder zumindest abzuschwächen.

Insbesondere war es die Aufgabe der vorliegenden Erfindung, einen Filtereinsatz und eine zugehörige Fluidfiltereinrichtung, insbesondere für die Kraftstofffilterung, anzugeben, die unter typischen Einsatzbedingungen in einem Fahrzeug gegenüber dem Stand der Technik eine verbesserte Filterleistung zeigen, wobei insbesondere die Robustheit der Fluidfiltereinrichtung gegen mechanische Vibrationen und Fluktuationen im Fluidstrom gesteigert werden sollte.

Es war eine weitere Aufgabe der vorliegenden Erfindung, dass die anzugebende Fluidfiltereinrichtung zudem ausgezeichnete Ausgangsfiltereigenschaften aufweisen sollte.

Zudem war es eine ergänzende Aufgabe der vorliegenden Erfindung, dass die anzugebende Fluidfiltereinrichtung so ausführbar sein sollte, dass auch unter typischen Einsatzbedingungen in einem Fahrzeug eine zuverlässige Wasserabscheidung möglich ist.

Die Erfinder der vorliegenden Erfindung haben nunmehr erkannt, dass sich die vorstehend beschriebenen Aufgaben überraschenderweise lösen lassen, wenn in einer Fluidfiltereinrichtung ein erstes Filterelement mit einem im Inneren angeordneten, bevorzugt kürzeren, zweiten Filterelement kombiniert wird, sofern die jeweils eingesetzten gefalteten Filtermedien eine bestimmte Mindestbiegesteifigkeit aufweisen und hinsichtlich der Filterklasse so ausgeführt sind, dass das Filtermedium des inneren Filters zumindest die gleiche Filterklasse aufweist, wie das Filtermedium des äußeren Filters, wie es in den Ansprüchen definiert ist.

Hierdurch werden überraschenderweise vorteilhafte Filtereinsätze und entsprechende Fluidfiltereinrichtungen erhalten, die unter typischen Einsatzbedingungen in einem Fahrzeug gegenüber dem Stand der Technik eine verbesserte Filterleistung zeigen, wobei die Filterleistung unter typischen Einsatzbedingungen überraschenderweise nur geringfügig von der Filterleistung im Standardtest am Laborprüfstand gemäß aktueller Normenvorgabe ISO 19438 abweicht. Ohne an diese Theorie gebunden sein zu wollen gehen die Erfinder davon aus, dass die sequenzielle Anordnung von zwei Filterelementen in Verbindung mit den höheren Biegesteifigkeiten der vielfach gefalteten Filtermedien zu einem besonders günstigen Verhalten unter typischen Einsatzbedingungen, insbesondere bei mechanischen Vibrationen und fluktuierenden Fluidströmen, beiträgt und sich insoweit in besonders vorteilhafter Weise mit dem Strömungsverhalten des Fluides ergänzt, welches durch die verringerte Filterfläche des innenliegenden zweiten Filterelements mit zumindest gleichguter Filterklasse bedingt wird. Wiederum ohne an diese Theorie gebunden sein zu wollen, gehen die Erfinder davon aus, dass die gefalteten Filtermedien durch die erhöhten Biegesteifigkeiten eine bessere Dämpfung von mechanischen Vibrationen und fluktuierenden Fluidströmen leisten, wobei bei bevorzugten Ausgestaltungen die in Folge des verkürzten innenliegenden Filterelements entstehenden Fluidkammern in vorteilhafter Weise dazu beitragen, Belastungsspitzen zu kompensieren, die sonst die Filterleistung unter typischen Einsatzbedingungen nachteilig beeinflussen könnten.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Fluidfiltereinrichtungen, Verwendungen und Filtereinheiten ergeben sich aus den Merkmalen bevorzugter Filtereinsätze.

Die Erfindung betrifft insbesondere einen Filtereinsatz für eine Fluidfiltereinrichtung, bevorzugt einen Kraftstofffilter, umfassend:
a) ein umlaufendes erstes Filterelement, umfassend ein gefaltetes erstes Filtermedium,
b) ein umlaufendes zweites Filterelement, umfassend ein gefaltetes zweites Filtermedium,
c) ein erstes Bodenelement und ein zweites Bodenelement, und
d) ein Deckelelement mit einem Fluidauslass,

wobei das erste Filterelement, das erste Bodenelement und das Deckelelement einen ersten Innenraum ausbilden, wobei das zweite Filterelement im ersten Innenraum angeordnet ist und wobei das zweite Filterelement, das zweite Bodenelement und das Deckelelement einen zweiten Innenraum ausbilden,
wobei der Abstand zwischen dem erste Bodenelement und dem zweiten Bodenelement in axialer Richtung im Bereich von 0,1*L₁ bis 0,6*L₁ liegt, wobei L₁ die Länge des ersten Filterelements in axialer Richtung ist,
wobei der Filtereinsatz dazu eingerichtet ist, dass ein zu filterndes Fluid von außen durch das erste Filterelement in den ersten Innenraum, aus dem ersten Innenraum durch das zweite Filterelement in den zweiten Innenraum und aus dem zweiten Innenraum durch den Fluidauslass hinaus fließen kann,
wobei der Quotient aus der zugänglichen Filterfläche des ersten Filterelements geteilt durch die zugängliche Filterfläche des zweiten Filterelements größer ist als 1, wobei der Quotient aus der Filterklasse des ersten Filtermediums geteilt durch die Filterklasse des zweiten Filtermediums 1 oder mehr beträgt, wobei die Filterklasse die gemäß ISO 19438:2003-11 für den Gesamtabscheidegrad bestimmte Filterklasse ist, wobei das erste Filtermedium eine Biegesteifigkeit gemäß DIN 53864:1978-08 von 10 N*mm² oder mehr aufweist, wobei die Biegesteifigkeit mit einem Biegewinkel von 5° bestimmt wird,
wobei das zweite Filtermedium eine Biegesteifigkeit gemäß DIN 53864:1978-08 von 2,5 N*mm² oder mehr aufweist, wobei die Biegesteifigkeit mit einem Biegewinkel von 5° bestimmt wird, und
wobei der Quotient der Biegesteifigkeit des ersten Filtermediums geteilt durch die Biegesteifigkeit des zweiten Filtermediums 1 oder mehr beträgt.

Der erfindungsgemäße Filtereinsatz ist für den Einsatz in Fluidfiltereinrichtungen, insbesondere in Kraftstofffiltern vorgesehen. Der Filtereinsatz kann im Rahmen von sogenannten Spin-On Filtern fest mit einem Gehäuse verbunden sein. Bevorzugt ist jedoch ein erfindungsgemäßer Filtereinsatz, wobei der Filtereinsatz ein auswechselbarer Filtereinsatz ist, welcher beispielsweise reversibel und zerstörungsfrei austauschbar in einem Filtergehäuse einer erfindungsgemäßen Fluidfiltereinrichtung angeordnet werden kann. Bei dem erfindungsgemäßen Filtereinsatz kann es sich um einen Vorfiltereinsatz oder einen Hauptfiltereinsatz handeln, wobei die Absolutwerte der Filterklassen zwischen diesen Ausgestaltungen variieren, da für Vorfilter regelmäßig auch höhere Werte der Filterklasse eingesetzt werden.

In Übereinstimmung mit dem fachmännischen Verständnis wird der erfindungsgemäße Filtereinsatz im Lichte eines zumeist zumindest weitgehend rotationssymmetrischen Aufbaus unter Bezugnahme auf die axiale Richtung beschrieben, die im Rahmen der vorliegenden Erfindung zumeist zwischen dem Deckelelement und dem ersten Bodenelement verläuft und zweckmäßigerweise zumeist mit der Längsrichtung der Filterelemente zusammenfallen wird, so dass die Filterelemente um diese axiale Richtung herum umlaufend ausgebildet sind. Darüber hinaus wird für die Beschreibung der erfindungsgemäßen Filtereinsätze ungeachtet einer etwaigen Abweichung von einem ideal rotationssymmetrischen Aufbau auch auf die orthogonal auf der axialen Richtung stehende radiale Richtung zurückgegriffen.

Insoweit im Rahmen der Erfindung auf das Volumen des ersten Innenraumes oder das Volumen des zweiten Innenraumes Bezug genommen wird, ist damit jeweils das gesamte Volumen des jeweiligen Innenraums gemeint, welcher durch das jeweilige Filterelement, das Deckelelement und das zugehörige Bodenelement ausgebildet wird, wobei etwaige Öffnungen in den Elementen, beispielsweise die Auslassöffnung im Deckelelement oder eine Öffnung zur Abführung von Wasser aus dem ersten Innenbereich, ausgeblendet werden, so dass die um die Öffnungen liegenden Flächen bei der Bestimmung des Volumens des Innenraums virtuell über die Öffnung hinweg verlängert werden. Dies bedeutet, dass die Volumina der Innenräume keine Differenzvolumina sind und entsprechend nicht um das Volumen von etwaigen Komponenten reduziert werden, welche gegebenenfalls im jeweiligen Innenraum angeordnet sind. Dies bedeutet insbesondere, dass das Volumen des ersten Innenraumes nicht durch das im ersten Innenraum angeordnete zweite Filterelement oder durch den vom zweiten Filterelement umfassten zweiten Innenraum reduziert wird.

Analog zu aus dem Stand der Technik bekannten Filtereinsätzen umfasst der erfindungsgemäße Filtereinsatz zunächst ein umlaufendes erstes Filterelement, welches am oberen Ende von einem Deckelelement mit einem Fluidauslass und am gegenüberliegenden Ende mit einem ersten Bodenelement begrenzt wird. Das umlaufende erste Filterelement, das Deckelelement und das Bodenelement bilden dabei einen ersten Innenraum aus. Ein solcher Filtereinsatz aus dem Stand der Technik wäre dazu eingerichtet, dass ein zu filterndes Fluid von außen durch das erste Filterelement in den ersten Innenraum und aus dem ersten Innenraum durch den Fluidauslass hinaus fließen kann.

In Übereinstimmung mit dem fachmännischen Verständnis muss dieser erste Innenraum nicht absolut vollständig von diesen Komponenten umgeben sein, so dass der Fluidauslass im Deckelelement oder etwaige Öffnungen im Bodenelement, die beispielsweise der Abfuhr von Wasser aus dem ersten Innenraum dienen, vorliegen können. Zumindest theoretisch ist es beispielsweise denkbar, dass eine Öffnung im Bodenelement so ausgeprägt ist, dass sie im Wesentlichen der Querschnittsfläche des ersten Innenraumes entspricht, so dass das erste Bodenelement im Wesentlichen nur noch der Einfassung des ersten Filterelements dient und der erste Innenraum im Wesentlichen nicht durch das erste Bodenelement begrenzt wird.

Im Gegensatz zu dem zumeist üblichen Aufbau des Standes der Technik ist im erfindungsgemäßen Filtereinsatz eine zweite Filterstufe vorgesehen. Hierfür wird ein umlaufendes zweites Filterelement vorgesehen, welches im Inneren des ersten Innenraums angeordnet ist. Das zweite Filterelement bildet zusammen mit dem an einem Ende angeordneten Deckelelement und einem am gegenüberliegenden Ende angeordneten zweiten Bodenelement einen zweiten Innenraum aus, welcher entsprechend ebenfalls im Inneren des ersten Innenraums liegt.

Der Fachmann versteht, dass aus dem geringeren Radius des innenliegenden zweiten Filterelements in der Praxis zumeist ohnehin folgt, dass die zum Filtern zugängliche Filterfläche des zweiten Filterelements verringert ist, so dass die vorstehenden Definition zu den Filterflächen zumeist schon aus konstruktiven Gründen erfüllt sein wird. Der entsprechende Gradient zwischen den Filterelementen wird von den Erfindern aber als ganz besonders vorteilhaft angesehen, sodass es bevorzugt ist, insoweit größere Gradienten einzustellen. Besonders bevorzugt ist wegen der Relevanz der für den Fluiddurchtritt verfügbaren Anströmfläche ein erfindungsgemäßer Filtereinsatz, wobei der Quotient aus der zugänglichen Filterfläche des ersten Filterelements geteilt durch die zugängliche Filterfläche des zweiten Filterelements 1,5 oder mehr, bevorzugt 3,0 oder mehr, besonders bevorzugt 4,5 oder mehr, beträgt.

Der Fachmann versteht, dass die vorstehend definierte Einrichtung des Filtereinsatzes, dass ein zu filterndes Fluid von außen durch das erste Filterelement in den ersten Innenraum, aus dem ersten Innenraum durch das zweite Filterelement in den zweiten Innenraum und aus dem zweiten Innenraum durch den Fluidauslass hinaus fließen kann, bei fachmännischer Auslegung bedeutet, dass ein zu filterndes Fluid nicht an dem zweiten Filterelement vorbei, d.h. unter Umgehung der zweiten Filterstufe, in den zweiten Innenraum und/oder durch den Fluidauslass hinaus fließen kann. Konstruktiv ist dies beispielsweise dadurch zu erreichen, dass das zweite Bodenelement ohne durchgehende Ausnehmungen ausgebildet wird und der resultierende Verbund aus zweitem Filterelement und zweitem Bodenelement so über dem Fluidauslass angeordnet wird, dass der Fluidauslass vollständig bedeckt ist.

In erfindungsgemäßen Filtereinsätzen sind das erste und das zweite Filterelement jeweils umlaufende Filterelemente, was insbesondere durch eine hohlzylinderartige Grundform erreicht werden kann, wobei jedoch auch vieleckige Grundflächen denkbar wären, wobei die Grenzen angesichts der Ausbildung der umlaufenden Filterelemente durch gefaltete Filtermedien ohnehin fließend sind. Bevorzugt ist bezogen auf die Volumina der Innenräume zusätzlich oder alternativ auch ein erfindungsgemäßer Filtereinsatz, wobei das Volumen des zweiten Innenraums 0,6*V₁ oder weniger, bevorzugt 0,5*V₁ oder weniger, besonders bevorzugt 0,4*V₁ oder weniger, beträgt, wobei V₁ das Volumen des ersten Innenraumes ist.

Die Filterelemente umfassen jeweils Filtermedien, welche gefaltet eingesetzt werden. Filtermedien und deren Einsatz in der Form von gefalteten Strukturen, die vom Fachmann teilweise auch als sogenannte Faltenbalge bezeichnet werden, sind dem Fachmann im Bereich der Filtertechnik umfassend vertraut. Für erfindungsgemäß einzusetzende Filtermedien sind insbesondere synthetische Medien interessant, wobei diese zumindest teilweise auch mit natürlichen Materialien wie beispielsweise Cellulosefasern kombiniert werden können. Bevorzugt ist nach Einschätzung der Erfinder ein erfindungsgemäßer Filtereinsatz, wobei das erste Filtermedium und/oder das zweite Filtermedium, bevorzugt beide Filtermedien, zumindest teilweise, bevorzugt überwiegend, besonders bevorzugt im Wesentlichen vollständig, aus einem thermoplastischen Kunststoff bestehen, der ausgewählt ist aus der Gruppe bestehend aus Polyolefinen, Polyamiden, Polyurethanen, Polycarbonaten und Polyestern, bevorzugt ausgewählt ist aus der Gruppe bestehend aus Polyolefinen und Polyestern, besonders bevorzugt ausgewählt ist aus der Gruppe bestehend aus Polyestern.

Ein umlaufendes erstes Filterelement kann aus solchen Filtermedien beispielsweise durch Faltung eines flachen Filtermediums in eine Zick-Zack-Form erhalten werden, wenn die Enden der resultierenden Zick-Zack-Struktur aufeinandergelegt und miteinander verbunden werden, um ein zylinderförmiges umlaufendes Filterelement zu erhalten, dessen Wandung durch das gefaltete Filtermedium gebildet wird. Bevorzugt ist mit Blick auf eine einfache Herstellung und eine vorteilhafte Filterleistung ein erfindungsgemäßer Filtereinsatz, wobei das erste Filtermedium ein umlaufend angeordnetes Faltenpaket ist, wobei das erste Filtermedium eine Vielzahl von im Wesentlichen gleichförmigen Faltungen umfasst, und/oder wobei das zweite Filtermedium ein umlaufend angeordnetes Faltenpaket ist, wobei das zweite Filtermedium eine Vielzahl von im Wesentlichen gleichförmigen Faltungen umfasst, wobei sich die Zahl der Faltungen bevorzugt zwischen dem ersten Filtermedium und dem zweiten Filtermedium unterscheidet.

Der Fachmann versteht, dass die erfindungsgemäßen Filtereinsätze hinsichtlich der Ausgestaltung der einzelnen Komponenten sehr flexibel sind, sofern die Ausgestaltungen nicht den vorstehend beschriebenen Zusammenhängen entgegenstehen. So ist es beispielsweise möglich, das Deckelelement oder die Bodenelemente mehrteilig auszuführen oder die Auslassöffnung durch eine Mehrzahl von Bohrungen auszubilden, statt lediglich eine Auslassöffnung vorzusehen.

Bei dem erfindungsgemäßen Filtereinsatz handelt es sich, wie vorstehend erläutert, um einen Filtereinsatz mit zwei hintereinander angeordneten Filterstufen, die durch das erste Filterelement und das zweite Filterelement gebildet werden. Im Rahmen der vorliegenden Erfindung orientiert sich die Bezeichnung der Komponenten, beispielsweise des Fluidauslasses, sowie die funktionale Verknüpfung der Elemente durch die Definition der Durchströmbarkeit an der in der Praxis sinnvollerweise zu erwartenden üblichen Betriebsrichtung. Bei dieser üblichen Betriebsrichtung wird ein zu filterndes Fluid, beispielsweise ein Kraftstoff, von außen durch das erste Filterelement in den ersten Innenraum, aus dem ersten Innenraum durch das zweite Filterelement in den zweiten Innenraum und anschließend aus dem zweiten Innenraum durch den Fluidauslass hinaus fließen. Der Fachmann versteht jedoch, dass entsprechende erfindungsgemäße Filtereinsätze zumindest theoretisch auch mit einer invertierten Flussrichtung betrieben werden könnten, so dass ein zu filterndes Fluid durch den Fluidauslass in den zweiten Innenraum hinein, durch das zweite Filterelement in den ersten Innenraum und aus dem ersten Innenraum durch das erste Filterelement hinausgeführt werden könnte. Da ein entsprechender Einsatz aber ohnehin quasi keine Praxisrelevanz haben dürfte, wird diese Möglichkeit nachfolgend nicht weiter erläutert. Insoweit haben die Erfinder auch nicht überprüft, ob sich die positiven technischen Effekte erfindungsgemäßer Filtereinsätze auch bei dieser technisch weniger sinnvollen Benutzung zeigen würden. Tatsächlich gehen die Erfinder eher davon aus, dass hierfür zumindest die vorstehend definierten Verhältnisse zwischen den Filterklassen und den Filterflächen, bzw. die sonstigen Relationen zwischen den Filterelementen, entsprechend invertiert werden müssten, so dass in der resultierenden, alternativen und nicht erfindungsgemäßen Ausgestaltung wohl beispielsweise das innere Filterelement länger ausgebildet werden müsste, um trotz der innenliegenden Anordnung eine größere Filterfläche zu realisieren.

In der Praxis werden die Filterelemente gerade bei vergleichsweise einfachen konstruktiven Ausgestaltungen, in vielen Fälle vollständig aus den Filtermedien bestehen. Jedoch ist es auch denkbar, dass neben den Filtermedien auch weitere Elemente in den Filterelementen vorgesehen werden, die beispielsweise einer Wasserabscheidung dienen, wie es nachfolgend offenbart wird. Zudem können die Filterelemente auch Rahmenelemente oder ähnliches umfassend und zumindest theoretisch auch mehrteilig ausgeführt werden, beispielsweise als verbundene Halbschalen, auch wenn eine einteilige Ausführung besonders bevorzugt ist. Der Fachmann versteht insoweit zwanglos, dass sich das für die Filterelemente zentrale Filtermedium in diesen Ausgestaltungen zweckmäßigerweise jeweils über die gesamte Länge sowie den gesamten Umfang der Filterelemente erstrecken wird. Für im Wesentlichen alle Ausführungsformen bevorzugt ist entsprechend ein erfindungsgemäßer Filtereinsatz, wobei sich das erste Filtermedium in axialer Richtung über die gesamte Länge des ersten Filterelements erstreckt, und/oder wobei sich das zweite Filtermedium in axialer Richtung über die gesamte Länge des zweiten Filterelements erstreckt. Für im Wesentlichen alle Ausführungsformen zusätzlich oder alternativ bevorzugt ist entsprechend ebenfalls ein erfindungsgemäßer Filtereinsatz, wobei sich das erste Filtermedium über den gesamten Umfang des ersten Filterelements erstreckt, und/oder wobei sich das zweite Filtermedium über den gesamten Umfang des zweiten Filterelements erstreckt. Besonders bevorzugt ist ein erfindungsgemäßer Filtereinsatz, wobei das erste Filterelement aus dem ersten Filtermedium besteht und/oder wobei das zweite Filterelement aus dem zweiten Filtermedium besteht.

Aus fertigungstechnischer Sicht ist es bevorzugt, wenn die Filterelemente in radialer Richtung einen gewissen Abstand voneinander aufweisen. Insoweit haben die Erfinder jedoch gefunden, dass die Einstellung eines entsprechenden Zwischenbereiches, d.h. des Teils des ersten Innenraums, welcher zwischen dem ersten Filterelement und dem zweiten Filterelement liegt, auch mit Blick auf die Robustheit der Filtereigenschaft unter Einsatzbedingungen vorteilhaft ist. Bevorzugt ist ein erfindungsgemäßer Filtereinsatz, wobei das erste Filterelement und das zweite Filterelement in radialer Richtung voneinander beabstandet sind, so dass der erste Innenraum einen zwischen dem ersten Filterelement und dem zweiten Filterelement angeordneten Zwischenbereich umfasst, wobei der mittlere Abstand im Bereich von 3 bis 20 mm, bevorzugt im Bereich von 5 bis 10 mm, liegt.

Die Bodenelemente können vorteilhafter Weise sehr flexibel ausgestaltet werden, wobei nach Einschätzung der Erfinder flache, plattenförmige Bodenelemente bevorzugt sind. Bevorzugt ist ein erfindungsgemäßer Filtereinsatz, wobei das erste Bodenelement und/oder das zweite Bodenelement, bevorzugt das erste Bodenelement und das zweite Bodenelement, flache Endplatten, bevorzugt kreisförmige Endscheiben sind, welche mit dem ersten Filterelement bzw. dem zweiten Filterelement verbunden sind. Insbesondere im Falle von im Wesentlichen gleichlangen Filterelementen ist es möglich, dass das erste Bodenelement und das zweite Bodenelement durch das gleiche Bauteil gebildet werden, so dass das erste Bodenelement und das zweite Bodenelement durch ein Gesamtbodenelement gebildet werden.

Bevorzugt ist ein erfindungsgemäßer Filtereinsatz, wobei das Deckelelement unmittelbar, d.h. beispielsweise ohne weitere Rahmen- oder Trägerstrukturen, mit dem ersten Filterelement und dem zweiten Filterelement verbunden ist. Das Deckelelement kann mehrteilig ausgeführt werden, beispielsweise durch zwei miteinander zu verschraubende Deckelteile, ist jedoch bevorzugt einstückig ausgebildet. Bevorzugt ist insbesondere wegen der einfachen Ausgestaltung ein erfindungsgemäßer Filtereinsatz, wobei das Deckelelement eine kreisförmige Endscheibe ist, in der der Fluidauslass im Wesentlichen zentral angeordnet ist. Das Deckelelement kann auf der in Richtung der Filterelemente weisenden Seite eine makroskopische Struktur aufweisen, so dass das Deckelelement beispielsweise teilweise in den ersten Innenraum hineinragen kann, wodurch es beispielsweise möglich ist, das zweite Filterelement relativ zum ersten Filterelement weiter unten im ersten Innenraum zu platzieren und es sozusagen etwas tiefer in diesem ersten Innenraum zu versenken. Nach Einschätzung der Erfinder ist es jedoch besonders bevorzugt, wenn das Deckelelement auf der in Richtung der Filterelemente weisenden Seite weitgehend flach bzw. eben ausgebildet ist, so dass die mit dem Deckelelement verbundenen Filterelemente im Wesentlichen auf der gleichen Höhen liegen. Insbesondere bei Einsatz eines verkürzten inneren Filterelements ergibt sich in Folge dieser Anordnung aus dem Längenunterschied der Filterelemente ein Kammerbereich, welcher nachfolgend weiter beschrieben wird und der nach Einschätzung der Erfinder zu einer besonders vorteilhaften Filterleistung unter typischen Einsatzbedingungen führt. Bevorzugt ist entsprechend ein erfindungsgemäßer Filtereinsatz, wobei das in Richtung des Deckelelements weisende Ende des ersten Filterelements und das in Richtung des Deckelelements weisende Ende des zweiten Filterelements bezogen auf die axiale Richtung um 0,05*L, oder weniger, bevorzugt um 0,02*L, oder weniger, besonders bevorzugt um 0,01*L, oder weniger, beabstandet sind, wobei L₁ die Länge des ersten Filterelements in axialer Richtung ist.

Insbesondere wenn die in Richtung der Deckelemente weisenden Enden von unterschiedlich langen Filterelementen im Wesentlichen auf der gleichen Höhe angeordnet sind, ergibt sich im ersten Innenraum zwischen den beiden Bodenelementen in bevorzugten erfindungsgemäßen Filtereinsätzen ein Freiraum, welcher im Rahmen der vorliegenden Erfindung als Kammerbereich bezeichnet wird, wobei ein solcher Kammerbereich bei gleich langen Filterelementen auch durch eine versetzte Anordnung erhalten werden kann. Die Auslegung des erfindungsgemäßen Filtereinsatzes mit einem solchen Kammerbereich ist nach Einschätzung der Erfinder für das Erreichen eine besonders vorteilhaften Filterleistung unter typischen Einsatzbedingungen besonders vorteilhaft, insbesondere beim Einsatz von kürzeren innenliegenden Filterelementen. Bevorzugt ist somit ein erfindungsgemäßer Filtereinsatz, wobei das erste Bodenelement und das zweite Bodenelement in axialer Richtung voneinander beabstandet sind, so dass der erste Innenraum einen zwischen dem ersten Bodenelement und dem zweiten Bodenelement angeordneten Kammerbereich umfasst. Bevorzugt ist dabei ein erfindungsgemäßer Filtereinsatz, wobei der Volumenanteil des Kammerbereichs am ersten Innenraum 10 % oder mehr, bevorzugt 12,5 % oder mehr, besonders bevorzugt 15 % oder mehr, beträgt.

Die erfindungsgemäßen Filtereinsätze kombinieren zum Erreichen der vorteilhaften Robustheit gegenüber Belastungen unter typischen Einsatzbedingungen das Konzept einer zweistufigen Filterung, beziehungsweise dem daraus resultierenden Unterschied in der zur Verfügung stehenden Filterfläche zwischen den Filterelementen, mit einer Maßgabe für die absoluten Biegesteifigkeiten der eingesetzten Filtermaterialien und einer Vorgabe für deren Filterklasse.

Die Erfinder haben erkannt, dass insbesondere für beide Filtermedien eine gewisse Mindestbiegesteifigkeit eingestellt werden muss, um auch unter den typischen Belastungen unter Einsatzbedingungen im Fahrzeug eine ausgezeichnete Filterleistung zu erhalten. Die Biegesteifigkeit der Filtermedien wird dabei gemäß DIN 53864:1978-08 bestimmt, wobei die Biegesteifigkeit erfindungsgemäß mit einem Biegewinkel von 5° bestimmt wird. Sofern die Biegesteifigkeit an einem bereits gefalteten Filtermedium bestimmt wird, erfolgt die Bestimmung durch Biegung parallel zu der Faltenrichtung, d.h. zumeist der axialen Richtung im Filtereinsatz, um einen etwaigen Einfluss der Faltung auf die Biegesteifigkeit auszublenden.

Die nach Einschätzung der Erfinder notwendigen Mindestbiegesteifigkeiten liegen dabei nach Einschätzung der Erfinder über den typischen Biegesteifigkeiten, die für die im Stand der Technik typischerweise eingesetzten Filtermedien bekannt sind. Dabei haben die Erfinder gefunden, dass besonders biegesteife Filtermedien insgesamt zu besonders günstigen Filtereigenschaften unter typischen Einsatzbedingungen führen. Erfindungsgemäß ist somit zunächst ein erfindungsgemäßer Filtereinsatz, wobei das erste Filtermedium eine Biegesteifigkeit von 10,0 N*mm² oder mehr, überaus bevorzugt von 13,0 N*mm² oder mehr, insbesondere bevorzugt von 16,0 N*mm² oder mehr, aufweist. Bevorzugt ist zusätzlich oder alternativ analog auch ein erfindungsgemäßer Filtereinsatz, wobei das zweite Filtermedium eine Biegesteifigkeit von 4,0 N*mm² oder mehr, bevorzugt von 5,5 N*mm² oder mehr, besonders bevorzugt von 7,0 N*mm² oder mehr, ganz besonders bevorzugt von 10,0 N*mm² oder mehr, überaus bevorzugt von 13,0 N*mm² oder mehr, insbesondere bevorzugt von 16,0 N*mm² oder mehr, aufweist.

In eigenen Tests haben die Erfinder festgestellt, dass sehr hohe Biegesteifigkeiten in manchen Filteraufbauten zu weniger günstigen Filtereigenschaften führen können. Bevorzugt ist vor diesem Hintergrund ein erfindungsgemäßer Filtereinsatz, wobei das erste Filtermedium eine Biegesteifigkeit im Bereich von 10,0 N*mm² bis 34,0 N*mm², bevorzugt im Bereich von 10,0 N*mm² bis 32,0 N*mm², besonders bevorzugt im Bereich von 10,0 N*mm² bis 28,0 N*mm², ganz besonders bevorzugt im Bereich von 10,0 N*mm² bis 24,0 N*mm², aufweist. Bevorzugt ist gleichfalls ein erfindungsgemäßer Filtereinsatz, wobei das zweite Filtermedium eine Biegesteifigkeit im Bereich von 2,5 N*mm² bis 34,0 N*mm², bevorzugt im Bereich von 3,0 N*mm² bis 32,0 N*mm², besonders bevorzugt im Bereich von 3,5 N*mm² bis 28,0 N*mm², ganz besonders bevorzugt im Bereich von 4,0 N*mm² bis 24,0 N*mm², aufweist.

Der Fachmann versteht, dass die Biegesteifigkeit der Filtermedien jeweils auf die effektive Biegesteifigkeit des gesamten Filtermediums bezogen ist. Beim Einsatz von Verbundmaterialien aus zwei oder mehr unterschiedlichen Materialien ist entsprechend die effektive Verbundbiegefestigkeit des tatsächlichen Filtermediums zu bestimmen und nicht auf die Biegesteifigkeit der reinen Materialien abzustellen. Für bestimmte Anwendungen ist beispielsweise ein erfindungsgemäßer Filtereinsatz bevorzugt, wobei das erste Filtermedium und/oder das zweite Filtermedium ein Verbundmaterial ist, bevorzugt ein Verbundmaterial aus einem Kunststoff und einem anorganischen Faserwerkstoff, beispielsweise Kohlefaser oder Glasfaser, bevorzugt Glasfaser. Denkbar ist beispielsweise auch ein erfindungsgemäßer Filtereinsatz, wobei das erste Filtermedium und/oder das zweite Filtermedium ein Verbundmaterial aus einem Kunststoff und einem Metall sind, beispielsweise ein Verbundmaterial aus einem textilen Flächengebilde und einer metallischen Gitterstruktur. Zusätzlich oder alternativ kann die Mindestbiegesteifigkeit der Filtermedien auch über eine makroskopische Strukturierung erzielt werden, bei der es sich nicht um die Faltung handelt, beispielsweise indem eine sogenannte Rillierung vorgesehen wird, wobei die Rillen bevorzugt im Wesentlichen quer zur Faltungsrichtung der Filterelemente verlaufen.

Als besonders vorteilhaft erachten es die Erfinder, wenn auch zwischen den Biegesteifigkeiten der eingesetzten Filtermedien ein Gradient eingestellt wird. Insoweit ergeben sich nach Einschätzung der Erfinder besonders vorteilhafte Leistungseigenschaften für solche erfindungsgemäße Filtereinsätze, in denen die Biegesteifigkeit des ersten Filtermediums zumindest der Biegesteifigkeit des zweiten Filtermediums entspricht, wobei die Biegesteifigkeit des ersten Filtermediums bevorzugt größer gewählt werden sollte, wodurch nicht nur ausgezeichnete Filtereigenschaften unter mechanische Belastung erreicht werden können, sondern auch eine größere Flexibilität hinsichtlich der Ausgestaltung des zweiten Filtermediums erreicht wird. Erfindungsgemäß ist ein erfindungsgemäßer Filtereinsatz, wobei der Quotient der Biegesteifigkeit des ersten Filtermediums geteilt durch die Biegesteifigkeit des zweiten Filtermediums 1 oder mehr beträgt, wobei der Quotient der Biegesteifigkeit des ersten Filtermediums geteilt durch die Biegesteifigkeit des zweiten Filtermediums bevorzugt größer als 1 ist. Bevorzugt ist ein erfindungsgemäßer Filtereinsatz, wobei der Quotient der Biegesteifigkeit des ersten Filtermediums geteilt durch die Biegesteifigkeit des zweiten Filtermediums 1,1 oder mehr, bevorzugt 1,2 oder mehr, besonders bevorzugt 1,5 oder mehr, beträgt. Bevorzugt ist zusätzlich oder alternativ ein erfindungsgemäßer Filtereinsatz, wobei der Quotient der Biegesteifigkeit des ersten Filtermediums geteilt durch die Biegesteifigkeit des zweiten Filtermediums 10 oder weniger, bevorzugt 5 oder weniger, besonders bevorzugt 2,5 oder weniger, beträgt. Besonders bevorzugt ist zusätzlich oder alternativ ein erfindungsgemäßer Filtereinsatz, wobei der Quotient der Biegesteifigkeit des ersten Filtermediums geteilt durch die Biegesteifigkeit des zweiten Filtermediums im Bereich von 1,05 bis 10, bevorzugt im Bereich von 1,15 bis 5, besonders bevorzugt im Bereich von 1,25 bis 2,5, liegt.

Ein weiteres Merkmal, welches die Erfinder als wichtig für die Erreichung hoher Filterleistungen unter Einsatzbedingungen identifiziert haben, ist die Filterklasse der eingesetzten Filtermedien bzw. deren Verhältnis zueinander. In Übereinstimmung mit dem fachmännischen Verständnis bezeichnet der Ausdruck Filterklasse im Rahmen der vorliegenden Erfindung die Filterklasse gemäß der ISO 19438:2003-11, entsprechend dem "filter rating" (vgl. Punkt 3.5 der ISO 19438:2003-11), welche das "filter rating" bei verschiedenen Abscheidegraden, beispielsweise von 90 %, von 95 % oder von 99 % angibt, und welche gemäß den Vorgaben der ISO 19438:2003-11 im Lichte des Gesamtabscheidegrades, entsprechend der "cumulative overall efficiency", bestimmt wird und angibt, für welche Partikelgrößen ein entsprechender Gesamtabscheidegrad erreicht wird. Für die Bewertung der Maßgabe, ob der Quotient aus der Filterklasse des ersten Filtermediums geteilt durch die Filterklasse des zweiten Filtermediums 1 oder mehr beträgt, kann der Fachmann in der Praxis einen Abscheidegrad als Bezugspunkt wählen, der eine vorteilhafte Auflösung ermöglicht und entsprechend in klar zu unterscheidenden Filterklassen resultiert, da das Filtermedium mit der besseren Filterklasse regelmäßig bei sämtlichen Abscheidegraden besser sein wird. Im Zweifelsfall, insbesondere bei der Bewertung ob spezifische Quotienten der Filterklassen erreicht werden, wird in Übereinstimmung mit dem fachmännischen Vorgehen jedoch die Referenzfilterklasse gemäß der ISO 19438:2003-11, entsprechend dem "filter reference rating" (vgl. Punkt 3.6 der ISO 19438:2003-11), herangezogen, welche das "filter rating" bei einem Abscheidegrad von 99 % angibt.

Die Erfinder haben erkannt, dass die Filterklasse des zweiten Filtermediums zumindest nicht höher, d.h. schlechter, gewählt werden sollte, als die Filterklasse des ersten Filtermediums, wobei es im Gegenteil bevorzugt ist, wenn die Filterklasse des zweiten Filtermediums vielmehr niedriger gewählt wird. Bevorzugt ist entsprechend ein erfindungsgemäßer Filtereinsatz, wobei der Quotient aus der Filterklasse des ersten Filtermediums geteilt durch die Filterklasse des zweiten Filtermediums 1,01 oder mehr, bevorzugt 1,02 oder mehr, besonders bevorzugt 1,05 oder mehr, beträgt.

Bevorzugt ist somit zunächst ein erfindungsgemäßer Filtereinsatz, insbesondere Hauptfiltereinsatz, wobei das erste Filtermedium eine Filterklasse von 5,0 µm(c) oder weniger, bevorzugt 4,0 µm(c) oder weniger, besonders bevorzugt 3,0 µm(c) oder weniger, aufweist, und/oder wobei das zweite Filtermedium eine Filterklasse von 5,0 µm(c) oder weniger, bevorzugt 4,0 µm(c) oder weniger, besonders bevorzugt 3,0 µm(c) oder weniger, aufweist. Für Vorfiltereinsätze werden zweckmäßigerweise Werte für die Filterklasse eingestellt, die um den Faktor 10 höher sind.

Nach Einschätzung der Erfinder kann durch einen Längenunterschied zwischen den Filterelementen eine zusätzliche Verbesserung der Filterleistung unter typischen Einsatzbedingungen erreicht werden. Ohne an diese Theorie gebunden sein zu wollen gehen die Erfinder davon aus, dass der resultierende verstärkte Unterschied in der in jeder Filterstufe für den Durchtritt zur Verfügung stehenden Fläche des Filtermediums und die daraus resultierende zusätzliche Verringerung der Durchtrittsfläche in der zweiten Filterstufe vorteilhaft ist, um die bei fluktuierenden Fluidströmen auftretenden Belastungen zu kompensieren. Nach Einschätzung der Erfinder wirken sich dabei größere Längenunterschiede prinzipiell vorteilhaft aus. Nach Einschätzung der Erfinder ist es auch deshalb bevorzugt einen Längenunterschied zwischen den Filterelementen einzustellen, da hierdurch, neben der Effekte unterschiedlicher Radien sowie gegebenenfalls unterschiedlicher Faltungen, sowohl ein größerer Mindestunterschied in der zur Verfügung stehend Durchtrittsfläche der Filtermedien ausgedrückt wird, als auch die konstruktive Dimension, dass der Fluidstrom auf dem Weg vom ersten zum zweiten Filterelement zumindest teilweise abgelenkt wird, wobei insbesondere die Ausbildung eines Kammerbereiches als besonders vorteilhaft angesehen wird. Bevorzugt ist somit zunächst ein erfindungsgemäßer Filtereinsatz, wobei das erste Filterelement in axialer Richtung um 10 % oder mehr, bevorzugt 15 % oder mehr, besonders bevorzugt 20 % oder mehr, länger ist als das zweite Filterelement. Da insbesondere bei sehr kleinen zweiten Filterelementen jedoch der Durchsatz nachteilig beeinflusst werden kann schlagen die Erfinder vor, dass der Längenunterschied in einem bestimmten Bereich gewählt werden sollte. Bevorzugt ist insoweit zusätzlich oder alternativ ein erfindungsgemäßer Filtereinsatz, wobei die Länge des ersten Filterelements L₁ in axialer Richtung im Bereich von 1,1*L₂ bis 2,5*L₂, bevorzugt im Bereich von 1,2*L₂ bis 2,0*L₂, besonders bevorzugt im Bereich von 1,3*L₂ bis 1,7*L₂, liegt, wobei L₂ die Länge des zweiten Filterelements in axialer Richtung ist.

Erfindungsgemäß ist bezogen auf den Abstand der die jeweiligen Filterelemente begrenzenden Bodenelemente ein erfindungsgemäßer Filtereinsatz, wobei der Abstand zwischen dem erste Bodenelement und dem zweiten Bodenelement in axialer Richtung im Bereich von 0,1*L₁ bis 0,6*L₁, bevorzugt im Bereich von 0,2*L₁ bis 0,5*L₁, besonders bevorzugt im Bereich von 0,25*L₁ bis 0,45*L₁, liegt, wobei L₁ die Länge des ersten Filterelements in axialer Richtung ist.

In besonders bevorzugten Ausgestaltungen kann der erfindungsgemäße Filtereinsatz in effizienter Weise mit einer mehrstufigen Wasserabscheidung kombiniert werden. Entsprechende Konzepte zur mehrstufigen Wasserabscheidung in Kraftstofffiltern sowie die dabei eingesetzten Materialien sind dem Fachmann ausgehend von seinem Fachwissen bekannt und können vorteilhafterweise ohne Einbußen bei der Abscheideleistung in erfindungsgemäße Filtereinsätze integriert werden.

Bevorzugt ist bezüglich der ersten Stufe der Wasserabscheidung ein erfindungsgemäßer Filtereinsatz, wobei das erste Filterelement eine fluiddurchlässige umlaufende Koaleszerlage zum Agglomerieren von im Fluid dispergierten flüssigen Verunreinigungen (was vom Fachmann zuweilen auch als Koagulieren bezeichnet wird), insbesondere von Wassertropfen, umfasst, wobei die Koaleszerlage bevorzugt auf der dem ersten Innenraum zugewandten Seite des ersten Filterelements angeordnet ist, wobei sich die Koaleszerlage besonders bevorzugt in axialer Richtung über die gesamte Länge des ersten Filterelements erstreckt, und wobei das erste Bodenelement eine Wasserauslassöffnung zum Abführen von Agglomerierten flüssigen Verunreinigungen aus dem ersten Innenraum umfasst, wobei die Wasserauslassöffnung bevorzugt zentral im ersten Bodenelement angeordnet ist.

Besonders bevorzugt ist dabei ein erfindungsgemäßer Filtereinsatz, wobei die Koaleszerlage auf der Oberfläche des ersten Filtermediums angeordnet ist, wobei die Koaleszerlage bevorzugt gefaltet oder gewickelt, besonders bevorzugt komplementär zum ersten Filtermedium gefaltet, ist. Besonders bevorzugt ist zusätzlich oder alternativ ein erfindungsgemäßer Filtereinsatz, wobei die Koaleszerlage ein oder mehrere Materialien umfasst, die ausgewählt sind aus der Gruppe bestehend aus offenporigen Vliesmaterialien, insbesondere offenporigen Vliesmaterialien aus synthetischen Fasern

Ganz besonders bevorzugt ist beim Einsatz einer solchen umlaufenden Koaleszerlage ein erfindungsgemäßer Filtereinsatz, wobei das erste Filterelement aus dem gefalteten ersten Filtermedium und der Koaleszerlage besteht.

Bevorzugt ist bezüglich der ersten Stufe der Wasserabscheidung ein erfindungsgemäßer Filtereinsatz, wobei das zweite Filterelement eine fluiddurchlässige umlaufende Abtrennlage zum Abtrennen von im Fluid vorliegenden flüssigen Verunreinigungen, insbesondere von Wassertropfen, umfasst, wobei die Abtrennlage bevorzugt auf der dem ersten Innenraum zugewandten Seite des zweiten Filterelements angeordnet ist, wobei sich die Abtrennlage besonders bevorzugt in axialer Richtung über die gesamte Länge des zweiten Filterelements erstreckt.

Besonders bevorzugt ist dabei ein erfindungsgemäßer Filtereinsatz, wobei die Abtrennlage als siebförmige Lage ausgebildet, bevorzugt mit einem mittleren Öffnungsdurchmesser im Bereich von 10 bis 200 µm, bevorzugt im Bereich von 12 bis 150 µm, besonders bevorzugt im Bereich von 15 bis 110 µm. Besonders bevorzugt ist zusätzlich oder alternativ ein erfindungsgemäßer Filtereinsatz, wobei die Abtrennlage ein oder mehrere hydrophobe Materialien umfasst, wobei die Abtrennlage bevorzugt aus hydrophoben Materialien besteht oder mit hydrophoben Materialien beschichtet ist, beispielsweise mit Polytetrafluorethylen oder vergleichbaren Materialien. Besonders bevorzugt ist zusätzlich oder alternativ auch ein erfindungsgemäßer Filtereinsatz, wobei die Abtrennlage auf der Oberfläche des zweiten Filtermediums angeordnet ist, wobei die Abtrennlage bevorzugt gefaltet, besonders bevorzugt komplementär zum zweiten Filtermedium gefaltet, ist.

Ganz besonders bevorzugt ist beim Einsatz einer solchen umlaufenden Abtrennlagen ein erfindungsgemäßer Filtereinsatz, wobei das erste Filterelement aus dem gefalteten zweiten Filtermedium und der Abtrennlage besteht.

Die Erfinder schlagen vor, dass die Filtereinsätze als Hauptfiltereinsätze zum Erreichen einer insgesamt vorteilhafte Filterleistung so ausgelegt werden sollten, dass sie im störungslosen Betrieb bestimmte Mindestabscheidegrade erreichen. Bevorzugt ist insoweit ein erfindungsgemäßer Filtereinsatz, wobei der Filtereinsatz im Standardtest gemäß ISO 19438:2003-11, d.h. im vibrationslosen Betrieb bei kontinuierlichem Fluidstrom, d.h. vibrations- und fluktuationslos quasi ohne äußere mechanische Belastung, für Partikel mit einer Partikelgröße von ≥4 µm, einen Abscheidegrad von 99,3 % oder mehr, bevorzugt 99,5 % oder mehr, besonders bevorzugt 99,7 % oder mehr, ganz besonders bevorzugt 99,9 % oder mehr, aufweist, wobei der Abscheidegrad der gemäß ISO 19438:2003-11 bestimmte Gesamtabscheidegrad, entsprechend der "cumulative overall efficiency", bei einer Partikelgröße von ≥4 µm ist. Für Vorfiltereinsätze gelten die vorstehenden Angaben entsprechend für den Gesamtabscheidegrad bei einer Partikelgröße von ≥10 µm.

Zudem ist es den Erfindern gelungen, für Hauptfiltereinsätze ein Kriterium zu identifizieren, mit dem sich eine hohe Leistungsfähigkeit unter typischen Einsatzbedingungen, insbesondere in LKW, sicherstellen lässt, wobei die erfindungsgemäßen Filtereinsätze vorteilhafterweise gezielt so ausgelegt werden können, dass diese Kriterien erfüllt werden. Bevorzugt ist mit Blick auf die unter typischen Einsatzbedingungen auftretenden mechanischen Belastungen nämlich ein erfindungsgemäßer Filtereinsatz, wobei der Filtereinsatz beim Filtern im vibrierenden Zustand, bevorzugt bei Vibration mit einer Frequenz im Bereich von 20 bis 2000 Hz und eine Beschleunigung im Bereich von 2 bis 7 G für Partikel mit einer Partikelgröße von 4 µm einen Abscheidegrad von 98 % oder mehr, bevorzugt 99 % oder mehr, besonders bevorzugt 99,5 % oder mehr, ganz besonders bevorzugt 99,9 % oder mehr, aufweist, wobei der Abscheidegrad der in Anlehnung an die ISO 19438:2003-11 bestimmte Gesamtabscheidegrad bei einer Partikelgröße von ≥4 µm ist, welcher unter Berücksichtigung der Vibration mit Diesel als Prüffluidbestimmt wird, und/oder wobei der Filtereinsatz beim Filtern von fluktuierenden Volumenströmen, bevorzugt von mit einer Intensität von ± 10 % oder mehr, besonders bevorzugt ± 20 % oder mehr, ganz besonders bevorzugt um 95 % oder mehr, fluktuierenden Volumenströmen für Partikel mit einem Partikelgröße von 4 µm einen Abscheidegrad von 98 % oder mehr, bevorzugt 99 % oder mehr, besonders bevorzugt 99,5 % oder mehr, ganz besonders bevorzugt 99,9 % oder mehr, aufweist, wobei der Abscheidegrad der in Anlehnung an die ISO 19438:2003-11 bestimmte Gesamtabscheidegrad bei einer Partikelgröße von ≥4 µm ist, welcher unter Berücksichtigung der Fluktuation mit Diesel als Prüffluidbestimmt wird. Für Vorfiltereinsätze gelten die vorstehenden Angaben entsprechend für den Gesamtabscheidegrad bei einer Partikelgröße von ≥10 µm.

Die Erfindung betrifft ebenfalls eine Fluidfiltereinrichtung zum Filtern eines Fluids, insbesondere einen Vorfilter oder einen Hauptfilter, umfassend:
i) ein Filtergehäuse, und
ii) einen im Filtergehäuse angeordneten erfindungsgemäßen Filtereinsatz.

Offenbart wird auch die Verwendung eines erfindungsgemäßen Filtereinsatzes oder einer erfindungsgemäßen Fluidfiltereinrichtung, bei der Filterung von Fluiden, insbesondere beim Betrieb von Fahrzeugen, zur Verbesserung der Konstanz der Filterleistung unter Einfluss von fahrzeugüblichen Bedingungen, insbesondere Vibrationen und/oder fluktuierenden Volumenströmen, insbesondere dynamisch fluktuierenden Volumenströmen des Fluids.

Bevorzugt ist eine entsprechende Verwendung, wobei das Fluid ein Treibstoff, insbesondere Diesel ist. Bevorzugt ist eine entsprechende Verwendung, wobei das Fahrzeug ein Nutzfahrzeug, insbesondere ein LKW, ist.

Die Erfinder erachten erfindungsgemäße Filtereinsätze, welche wie vorstehend offenbart auf gefaltete Filtermedien zurückgreifen, mit Blick auf die Praxisrelevanz für besonders relevant, insbesondere weil sich die Effekte der Erfindung in diesen Fällen besonders deutlich zeigen. Jedoch schlagen die Erfinder vor, dass durch Einstellung der vorstehend erörterten Filterflächenunterschiede, Biegesteifigkeiten und Filterklassen auch mit nicht oder nur teilweise gefalteten Filtermedien immer noch vorteilhafte Einsätze für Kraftstofffilter erhalten werden können. Entsprechend werden im Zusammenhang mit der Erfindung auch solche Einsätze für Kraftstofffilter offenbart, die zur Unterscheidung von erfindungsgemäßen Filtereinsätzen als Filtereinheiten bezeichnet werden. Für diese offenbarten Filtereinheiten gelten die vorstehend für erfindungsgemäße Filtereinsätze offenbarten bevorzugten Merkmale entsprechend. Offenbart wird somit einen Filtereinheit für eine Fluidfiltereinrichtung, umfassend:
a) ein umlaufendes erstes Filterelement, umfassend ein erstes Filtermedium,
b) ein umlaufendes zweites Filterelement, umfassend ein zweites Filtermedium,
c) ein erstes Bodenelement und ein zweites Bodenelement, und
d) ein Deckelelement mit einem Fluidauslass,

wobei das erste Filterelement, das erste Bodenelement und das Deckelelement einen ersten Innenraum ausbilden, wobei das zweite Filterelement im ersten Innenraum angeordnet ist und wobei das zweite Filterelement, das zweite Bodenelement und das Deckelelement einen zweiten Innenraum ausbilden,
wobei der Filtereinsatz dazu eingerichtet ist, dass ein zu filterndes Fluid von außen durch das erste Filterelement in den ersten Innenraum, aus dem ersten Innenraum durch das zweite Filterelement in den zweiten Innenraum und aus dem zweiten Innenraum durch den Fluidauslass hinaus fließen kann,
wobei der Quotient aus der zugänglichen Filterfläche des ersten Filterelements geteilt durch die zugängliche Filterfläche des zweiten Filterelements größer ist als 1,wobei der Quotient aus der Filterklasse des ersten Filtermediums geteilt durch die Filterklasse des zweiten Filtermediums 1 oder mehr beträgt, wobei die Filterklasse die gemäß ISO 19438:2003-11 für den Gesamtabscheidegrad bestimmte Filterklasse ist, und
wobei das erste Filtermedium und das zweite Filtermedium eine Biegesteifigkeit gemäß DIN 53864:1978-08 von 2,5 N*mm² oder mehr aufweisen.

Nachfolgend werden die Erfindung und bevorzugte Ausführungsformen der Erfindung unter Bezugnahme auf die beiliegenden Figuren näher erläutert und beschrieben. In den Figuren zeigen dabei:
- Fig. 1a: eine schematische Darstellung eines nicht erfindungsgemäßen Filtereinsatzes für eine Fluidfiltereinrichtung;
- Fig. 1b: eine schematische Darstellung eines gefalteten Filterelements und dessen Deformation unter Einsatzbedingungen;
- Fig. 2: eine schematische Darstellung eines erfindungsgemäßen Filtereinsatzes für eine Fluidfiltereinrichtung in einer bevorzugten Ausführungsform;
- Fig. 3: eine schematische Darstellung eines erfindungsgemäßen Filtereinsatzes für eine Fluidfiltereinrichtung in einer alternativ bevorzugten Ausführungsform;
- Fig. 4: eine graphische Auftragung von gemessenen Gesamtabscheidegraden bei ≥4 µm in % (Y) mit der Zeit (X) für verschiedene Filtereinsätze unter unterschiedlichen Belastungsszenarien;
- Fig. 5: eine vergrößerte Darstellung eines Ausschnitts der graphischen Auftragung der Fig. 4; und
- Fig. 6: eine graphische Auftragung der des Gesamtabscheidegrades bei ≥4 µm für die verschiedenen Filtereinsätze der Fig. 4.

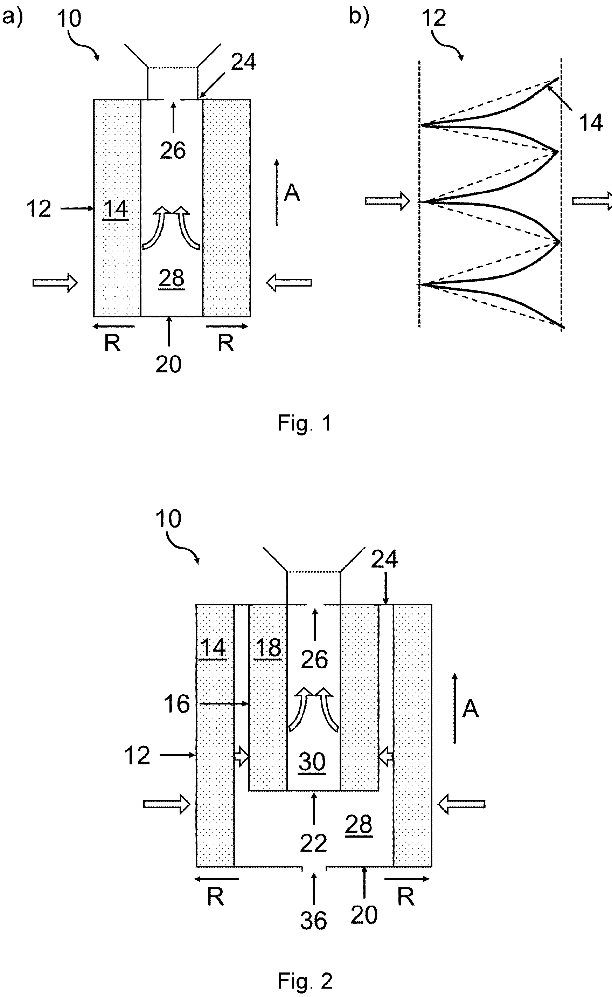

Fig. 1a) zeigt eine Querschnittsdarstellung eines nicht erfindungsgemäßen Filtereinsatzes 10 für eine Fluidfiltereinrichtung. Der rotationssymmetrische Filtereinsatz 10 weist ein umlaufendes erstes Filterelement 12 auf, welches aus einem gefalteten ersten Filtermedium 14 besteht und wird von einem Deckelelement 24 sowie einem ersten Bodenelement 20, welche beide mit dem Filterelement 12 verbunden sind, in axialer Richtung A oben und unten begrenzt, sodass die Komponenten gemeinsam einen ersten Innenraum 28 ausbilden.

Beim Filtern von Fluiden strömt ein Fluid, beispielsweise Dieselkraftstoff, in Bezug auf die radiale Richtung R von außen in den Filtereinsatz 10 ein und passiert dabei das erste Filtermedium 14. Durch einen Fluidauslass 26 im Deckelelement 24 fließt das auf diese Weise einstufig gefilterte Fluid anschließend wieder aus dem Filtereinsatz 10 heraus. Die Strömungsrichtung des Fluids ist in den Fig. 1a) und 1b) durch unausgefüllte Richtungspfeile angezeigt.

Fig. 1b) visualisierte schematisch das Verhalten des ersten Filtermediums 14 des in der Fig. 1a) dargestellten nicht erfindungsgemäßen Filtereinsatzes 10 anhand einer Querschnittsdarstellung in der Ebene senkrecht zur axialen Richtung A bei Einsatzbedingungen am Fahrzeug, insbesondere bei dynamisch fluktuierenden Volumenströmen. Das gefaltete erste Filtermedium 14 liegt im Ausgangszustand in im Wesentlichen gleichförmigen Faltungen vor. Dies wird in Fig. 1b) durch die gestrichelte zickzackförmige Linie angedeutet. Unter mechanischer Belastung im Einsatz verändert sich diese Zick-Zack-Form derart, dass das erste Filtermedium 14 teilweise deformiert, insbesondere lokal gestaucht bzw. gestreckt, wird und entsprechend seine Filtereigenschaften verändert. Ohne an diese Theorie gebunden sein zu wollen nehmen die Erfinder an, dass dies im Betrieb unter anderem zu einer Änderung des Porendurchmessers des ersten Filtermediums 14 führen kann, sodass insbesondere bei fluktuierenden Strömen, d.h. der cyclischen Be- und Entlastung der Filterfalten zwischen den in Fig. 1b) eingezeichneten Extremzuständen, zumindest teilweise eine Öffnung der Poren erfolgen kann, durch die die Filtereffizienz verringert wird.

Fig. 2 zeigt demgegenüber eine schematische Querschnittsdarstellung eines erfindungsgemäßen Filtereinsatzes 10 für erfindungsgemäße Fluidfiltereinrichtungen, in denen ein entsprechender Filtereinsatz 10 in ein geeignetes Gehäuse eingesetzt wird, wobei auch in Fig. 2 die Flussrichtung des Fluids durch unausgefüllte Richtungspfeile angezeigt wird. Der gezeigte Filtereinsatz 10 ist ebenfalls im Wesentlichen rotationssymmetrisch aufgebaut, sodass die vom Filtereinsatz 10 umfassten Filterelemente mit gefalteten Filtermedien, welche vom Fachmann aufgrund ihrer Beschaffenheit zuweilen auch als Faltenbalge bezeichnet werden, bezogen auf ihre Einhüllende eine hohlzylindrische Grundform aufweisen. Wie aus dem Stand der Technik bekannt, wird ein erster Innenraum 28 des Filtereinsatzes 10 durch das erste umlaufende Filterelement 12 ausgebildet, welches mit einem ersten Bodenelement 20 und einem Deckelelement 24 verbunden ist. Im erfindungsgemäßen Filtereinsatz 10 wird im Gegensatz zum Stand der Technik gemäß Fig. 1 im ersten Innenraum 28 in radialer Richtung R innenliegend allerdings ein zweiter Innenraum 30 durch ein zweites umlaufenden Filterelement 16 ausgebildet, welches mit einem zweiten Bodenelement 22 und dem Deckelelement 24 verbunden ist, sodass zwischen dem ersten Filterelement 12 und dem zweiten Filterelement 16 ein Zwischenraum ausgebildet wird, der in radialer Richtung R beispielsweise eine Breite von 8 mm aufweisen kann.

Im gezeigten Beispiel der Fig. 2 besteht das erste Filterelement 12 aus einem gefalteten ersten Filtermedium 14 und das zweite Filterelement 16 aus einem gefalteten zweiten Filtermedium 18. In axialer Richtung A ist das erste Filterelement 12 in der dargestellten bevorzugten Ausführungsform um etwa 40 % länger als das zweite Filterelement 16, sodass die Länge des ersten Filterelements 12 L₁ in etwa dem 1,4-fachen der Länge des zweiten Filterelements 16 L₂ entspricht. Entsprechend der unterschiedlichen Längen der Filterelemente, sowie dem in axialer Richtung A gemeinsamen Abschluss durch das gleiche, in diesem Fall einstückig ausgebildete Deckelelement 24, wird ein Abstand zwischen dem ersten Bodenelement 20 und dem zweiten Bodenelement 22, welche jeweils als kreisförmige Endscheiben ausgebildet sind, erhalten, der etwa 30 % der Länge des ersten Filterelementes 12 entspricht, wodurch zwischen den Endscheiben ein Kammerbereich ausgebildet wird, welcher einen Volumenanteil am ersten Innenraum 28 von etwa 30 % hat.

Zudem bedingt die gewählte Ausführung der Filterelemente einen Volumenunterschied zwischen dem ersten Innenraum 28 und dem zweiten Innenraum 30, wobei der Anteil des zweiten Innenraums 30 am ersten Innenraum 28 in etwa 8 % beträgt. Die für den Fluiddurchtritt verfügbare Anströmfläche, das heißt die jeweils für eine Durchströmung zur Verfügung stehende Filterfläche, ist durch die unterschiedlichen Radien sowie die unterschiedlichen Längen der Filterelemente für das erste Filterelement 12 signifikant größer als für das zweite Filterelement 16.

Das erste Filtermedium 14 und das zweite Filtermedium 18 sind jeweils umlaufend angeordnete Faltenpakete aus einem polyesterbasierten Filtermaterial mit einer Vielzahl von im Wesentlichen gleichförmigen Faltungen, welche sich jeweils in axialer Richtung A über die gesamte Länge sowie den gesamten Umfang der jeweiligen Filterelemente erstrecken. Das erste Filtermedium 14 weist im gezeigten bevorzugten Beispiel eine Biegesteifigkeit von etwa 18,4 N*mm² auf und das zweite Filtermedium 18 weist eine Biegesteifigkeit von etwa 9,12 N*mm² auf, wobei die Biegesteifigkeit nach DIN 53864:1978-08 mit einem Biegewinkel von 5° gemessen wird und jeweils auf die effektive Biegesteifigkeit des gesamten Filtermediums bezogen ist.

Der Quotient aus der Referenzfilterklasse des ersten Filtermediums 14, nämlich 2,4 µm(c), geteilt durch die Referenzfilterklasse des zweiten Filtermediums 18, nämlich 2,2 µm(c), beträgt im gezeigten Beispiel 1,09.

Das ebenfalls als kreisförmige Endscheibe ausgebildete Deckelelement 24 weist zentral einen Fluidauslass 26 zum Abführen eines in den Filtereinsatz 10 eingeleiteten Fluids auf. Das erste Bodenelement 20 weist eine im gezeigten Beispiel optionale Wasserauslassöffnung 36 auf, um für eine im Filtereinsatz 10 integrierte zweistufige Wasserabscheidung die Abfuhr von abgeschiedenem Wasser zu ermöglichen.

Im Einsatz in einer Fluidfiltereinrichtung, beispielsweise einem Kraftstofffilter in einem LKW, wird der gezeigte Filtereinsatz 10 der Fig. 2 in einem Filtergehäuse der Fluidfiltereinrichtung angeordnet, insbesondere als Hauptfilter bzw. hocheffizienter Filter. Ein zu filterndes Fluid, beispielsweise ein Treibstoff wie Diesel, kann entsprechend einer in der Fig. 2 als Richtungspfeile eingezeichneten Flussrichtung entgegen der radialen Richtung R von außen durch das erste Filterelement 12 in den ersten Innenraum 28, aus dem ersten Innenraum 28 durch das zweite Filterelement 16 in den zweiten Innenraum 30 und aus dem zweiten Innenraum 30 durch den Fluidauslass 26 hindurch strömen. Dadurch, dass die Filterstufen, dargestellt durch das erste Filterelement 12 und das zweite Filterelement 16, hintereinander angeordnet sind, wird entsprechend eine zweistufige Filterung entlang der üblichen Betriebsrichtung ermöglicht, wobei eine verbesserte Dämpfungsresistenz des Filtereinsatzes 10 nach Einschätzung der Erfinder nicht nur durch die erfindungsgemäße Wahl der Biegesteifigkeiten und Filterklassen der Filtermedien, sondern in der dargestellten bevorzugten Ausführungsform insbesondere auch durch den im ersten Innenraum 28 zumindest teilweise abgelenkten Fluidstrom, der sich aus der verkürzten zweiten Filterstufe ergibt, erreicht wird.

Im vibrationslosen Betrieb kann der gezeigte Filtereinsatz 10 bei einem kontinuierlichen Fluidstrom für Partikel mit einem mittleren Durchmesser von 4 µm beispielsweise einen Gesamtabscheidegrad von 99,7 % erreichen. Diese Filterleistung wird dabei in vorteilhafter Weise ebenfalls beim Filtern unter mechanischen Belastungen erreicht, wie sie im typischen Fahrzeugbetrieb auftreten, insbesondere unter Vibrationen und bei fluktuierenden Fluidströmen. Die Filterperformance unter Einfluss von Vibrationen und dynamisch fluktuierenden Volumenströmen des Fluids kann mit dem gezeigten Filtereinsatz 10 entsprechend in vorteilhafter Weise hoch gehalten werden.

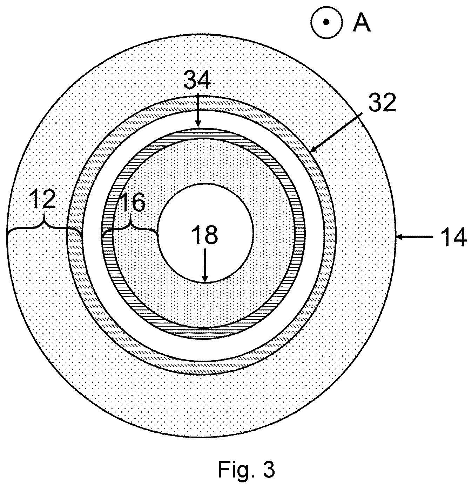

Fig. 3 zeigt eine schematische Querschnittsdarstellung in der orthogonal zur axialen Richtung A stehenden Ebene durch einen erfindungsgemäßen Filtereinsatz 10 in einer alternativ bevorzugten Ausführungsform. In dieser Ausführungsform wird das erste Filterelement 12 durch das erste Filtermedium 14 und durch eine fluiddurchlässige umlaufende Koaleszerlage 32 gebildet. Die Koaleszerlage 32 ist im gezeigten Beispiel komplementär zum ersten Filtermedium 14 gefaltet und ist in radialer Richtung R innen liegend im ersten Filterelement 12 angeordnet. Sie erstreckt sich in axialer Richtung A über die gesamte Länge des ersten Filterelements 12. Die Koaleszerlage 32 besteht aus offenporigen Vliesmaterialien, um im Fluid dispergierte flüssige Verunreinigungen, insbesondere Wasser, zu koagulieren.

Im gezeigten Beispiel wird das zweite Filterelement 16 durch das zweite Filtermedium 18 und durch eine fluiddurchlässige umlaufende Abtrennlage 34 zum Abtrennen von im Fluid vorliegenden flüssigen Verunreinigungen gebildet. Die Abtrennlage 34 ist komplementär zum zweiten Filtermedium 18 gefaltet und ist in radialer Richtung R außen liegend im zweiten Filterelement 16 angeordnet. Sie erstreckt sich in axialer Richtung A über die gesamte Länge des zweiten Filterelements 16. Die Abtrennlage 34 ist als siebförmige Lage ausgebildet und besteht aus einem hydrophob ausgerüsteten Polyester.

In der gezeigten Ausführungsform der Fig. 3 umfasst das erste Bodenelement 20 in jedem Fall die in Fig. 2 als optional benannte zentrale Wasserauslassöffnung 36, um die an der Koaleszerlage 32 und der Abtrennlage 34 abgeschiedenen flüssigen Verunreinigungen, in den meisten praxisrelevanten Fällen insbesondere Wasser, aus dem Filtereinsatz 10 abzuleiten.

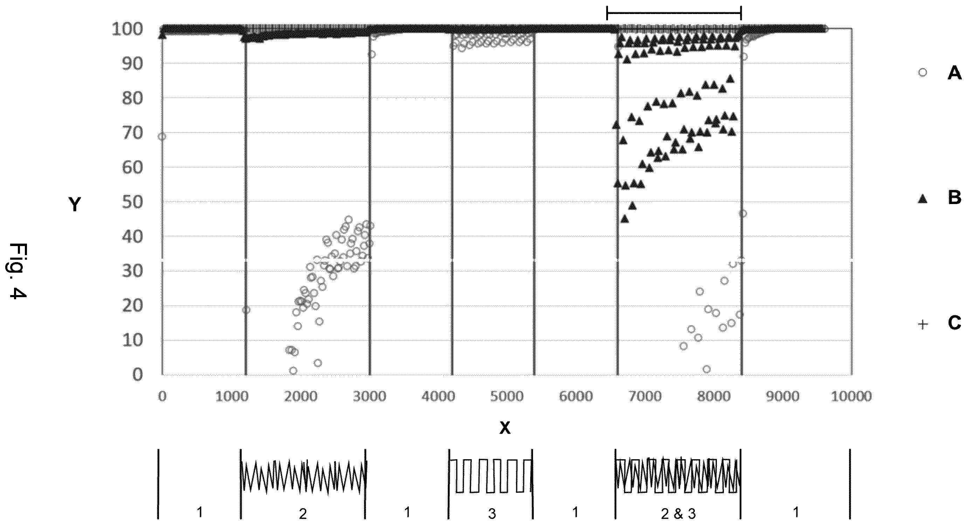

Nachfolgend werden die Erfindung und bevorzugte Ausführungsformen der Erfindung zudem unter Bezugnahme auf ein Experiment und die in den Fig. 4 bis 6 dargestellten Ergebnisse weiter erläutert und beschrieben.

### Experiment:

Die Erfinder haben den Gesamtabscheidegrad von drei ausgewählten Filtereinsätzen, die nachfolgend als A, B und C bezeichnet werden, unter verschiedenen Belastungsbedingungen untersucht, um die Leistungsfähigkeit der Filtereinsätze für die Abscheidung von Partikeln mit einem mittleren Durchmesser von 4 µm oder mehr bei in der Praxis unter Einsatzbedingungen auftretenden Belastungen zu bewerten.

### Untersuchte Filtereinsätze:

Die Filtereinsätze A und B repräsentieren zwei verschiedene kommerziell erhältliche Filtereinsätze mit einem Aufbau gemäß Fig. 1a), wobei allerdings verschiedene erste Filtermedien eingesetzt wurden. Das erste Filtermedium des Filtereinsatzes A weist eine Referenzfilterklasse von 4,3 µm(c) bei einer Biegesteifigkeit von 22,8 N*mm² auf. Das erste Filtermedium des Filtereinsatzes B weist hingegen eine Referenzfilterklasse von 2,4 µm(c) bei einer Biegesteifigkeit von 18,4 N*mm² auf.

Der Filtereinsatz C ist ein erfindungsgemäßer Filtereinsatz, welcher entsprechend der Fig. 2 ausgeführt ist. Die Biegesteifigkeiten des ersten und des zweiten Filtermediums beträgt 18,4 N*mm² bzw. 18,4 N*mm². Der Quotient der Referenzfilterklassen der Filtermedien beträgt 1. Die Länge des ersten Filterelements entspricht etwa der 1,4-fachen Länge des zweiten Filterelements.

### Versuchsdurchführung:

Die Messung der Gesamtabscheidegrade erfolgte in Anlehnung an die ISO 19438:2003-11 für Partikel einer Partikelgröße von ≥4 µm, wobei jedoch Diesel als Testfluid eingesetzt wurde und die nachfolgend beschriebenen Belastungsszenarien angelegt wurden. Die untersuchten Filter wurden vor dem Einsatz im Messverfahren in üblicher Weise bestaubt. Für die Messungen wurden die Filtereinsätze A, B und C in insgesamt sieben Phasen für einen definierten Testzeitraum jeweils unterschiedlichen Belastungsbedingungen ausgesetzt. In einem Belastungsszenario 1 wurden die Abscheideeffizienzen der Filtereinsätze im vibrationslosen und fluktuationslosen Zustand, das heißt bei konstantem Volumenstrom eines den Filtereinsatz durchströmenden Fluids ohne mechanische Vibrationen gemessen, was auch als "steady state" bezeichnet wird.

In einem Belastungsszenario 2 wurden die Filtereinsätze jeweils mit einer mechanischen Vibrationsfrequenz belastet, um die im Fahrzeugeinsatz auftretenden Vibrationen zu simulieren.

In einem Belastungsszenario 3 wurden die Filtereinsätze jeweils mit einem fluktuierenden Strom des zu filternden Fluids belastet, dessen Flussrate cyclisch jeweils für eine Minute zwischen 100 % und 25 % der nominalen Flussrate alterniert wurde.

In einem Belastungsszenario 2&3 wurden die vorstehend beschriebenen Belastungsszenarien 2 und 3 gleichzeitig angelegt.

### Ergebnisse:

Die Ergebnisse der Messungen sind graphisch in Fig. 4 aufgetragen, wobei auf der Y-Achse der Gesamtabscheidegrad für Partikel mit einer Partikelgröße ≥4 µm in % und auf der X-Achse die Versuchszeit in Sekunden aufgetragen ist. Über den gesamten Testzeitraum von 10000 s wurden die Filtereinsätze A, B und C nacheinander den vorstehend beschriebenen und ebenfalls graphisch dargestellten Belastungsszenarien ausgesetzt, wobei die entsprechenden Phasen mit mechanischer Belastung jeweils durch Zeitintervallen im "steady state" getrennt wurden, sodass die Messung insgesamt 7 Phasen umfasst.

Aus der Fig. 4 ist deutlich sichtbar, dass der Filtereinsatz A im Belastungsszenario 2 einen Gesamtabscheidegrad von weniger als 50 % aufweist und somit im Vergleich zum erfindungsgemäßen Filtereinsatz C hohe Verluste in der Abscheideeffizienz erfährt. Auch im Belastungsszenario 3 ist eine verringerte Abscheideeffizienz des Filtereinsatzes A erkennbar, die diesen für viele Anwendungsfälle unbrauchbar machen würde. Für eine Kombination der Belastungsszenarien im Belastungsszenario 2&3 sinkt der Gesamtabscheidegrad von Filtereinsatz A allerdings so stark, dass sie in vielen Fällen nicht mehr sinnvoll bestimmt werden kann und liegt in allen Fällen unter 40 %. Der Filtereinsatz B zeigt in den isolierten Belastungsszenarien 2 und 3 noch eine akzeptable Filterleistung. Im kombinierten Belastungsszenario 2&3 zeigt sich jedoch eine starke Oszillation des Gesamtabscheidegrades, wobei der mittlere Gesamtabscheidegrad deutlich unter 90 % liegt.

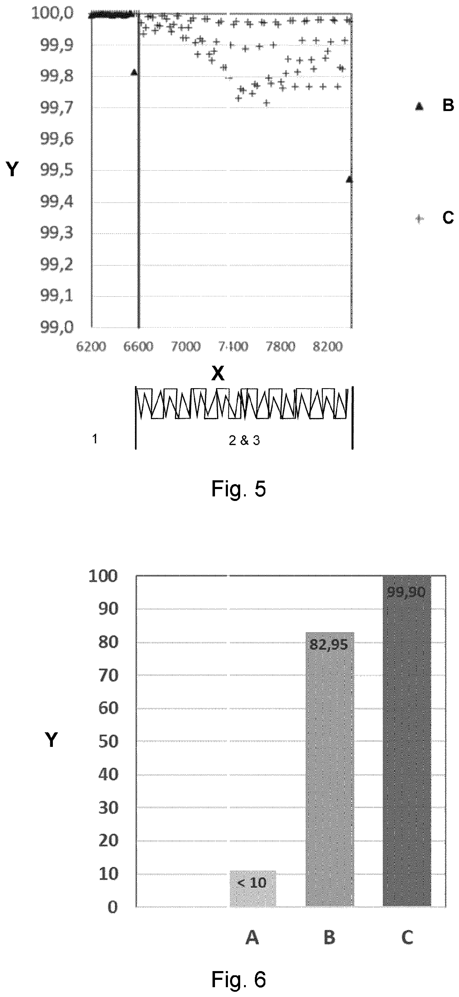

Zur Verdeutlichung der erheblichen Verbesserung der Robustheit des erfindungsgemäßen Filtereinsatzes C im Vergleich zu den Filtereinsätzen A und B ist in Fig. 5 ein Ausschnitt der Fig.4 dargestellt, welcher die Abscheideeffizienz im Zeitintervall des Belastungsszenarios 2&3 vergrößert darstellt. Es ist deutlich zu erkennen, dass der erfindungsgemäße Filtereinsatz C zu jedem Zeitpunkt einen hervorragenden Gesamtabscheidegrad von über 99,7 % aufweist und dabei nur eine relativ geringe Streuung der Messwerte beobachtet werden kann.

Entsprechend liegt auch der mittlere Gesamtabscheidegrad, der sich im Belastungsszenario 2&3 für den erfindungsgemäßen Filtereinsatz C ergibt, bei 99,90 %, während der Filtereinsatz B im Durchschnitt lediglich 82,95 % und der Filtereinsatz A sogar nur weniger als 10 % erreichen kann, wie es in der Fig. 6 aufgetragen ist. Dieses Experiment belegt entsprechend nicht nur die deutliche Verbesserung der Konstanz der erreichbaren Filterleistung mit erfindungsgemäßen Filtereinsätzen C unter Einsatzbedingungen am Fahrzeug, das heißt insbesondere unter mechanischen Vibrationen sowie dynamisch fluktuierenden Volumenströmen, sondern dokumentiert auch die durchgehend hohen Abscheidewerte, die mit erfindungsgemäßen Filtereinsätzen realisierbar sind.

### Bezugszeichen

- 10: Filtereinsatz
- 12: erstes Filterelement
- 14: erstes Filtermedium
- 16: zweites Filterelement
- 18: zweites Filtermedium
- 20: erstes Bodenelement
- 22: zweites Bodenelement
- 24: Deckelelement
- 26: Fluidauslass
- 28: erster Innenraum
- 30: zweiter Innenraum
- 32: Koaleszerlage
- 34: Abtrennlage
- 36: Wasserauslassöffnung

- A: axiale Richtung
- R: radiale Richtung

## Patentansprüche

1. Filtereinsatz (10) für eine Fluidfiltereinrichtung, umfassend:
a) ein umlaufendes erstes Filterelement (12), umfassend ein gefaltetes erstes Filtermedium (14),
b) ein umlaufendes zweites Filterelement (16), umfassend ein gefaltetes zweites Filtermedium (18),
c) ein erstes Bodenelement (20) und ein zweites Bodenelement (22), und
d) ein Deckelelement (24) mit einem Fluidauslass (26),
wobei das erste Filterelement (12), das erste Bodenelement (20) und das Deckelelement (24) einen ersten Innenraum (28) ausbilden, wobei das zweite Filterelement (16) im ersten Innenraum (28) angeordnet ist und wobei das zweite Filterelement (16), das zweite Bodenelement (22) und das Deckelelement (24) einen zweiten Innenraum (30) ausbilden,
wobei der Abstand zwischen dem erste Bodenelement (20) und dem zweiten Bodenelement (22) in axialer Richtung im Bereich von 0,1*L₁ bis 0,6*L₁ liegt, wobei L₁ die Länge des ersten Filterelements (12) in axialer Richtung ist,
wobei der Filtereinsatz (10) dazu eingerichtet ist, dass ein zu filterndes Fluid von außen durch das erste Filterelement (12) in den ersten Innenraum (28), aus dem ersten Innenraum (28) durch das zweite Filterelement (16) in den zweiten Innenraum (30) und aus dem zweiten Innenraum (30) durch den Fluidauslass (26) hinaus fließen kann,
wobei der Quotient aus der zugänglichen Filterfläche des ersten Filterelements (12) geteilt durch die zugängliche Filterfläche des zweiten Filterelements (16) größer ist als 1,
wobei der Quotient aus der Filterklasse des ersten Filtermediums (14) geteilt durch die Filterklasse des zweiten Filtermediums (18) 1 oder mehr beträgt, wobei die Filterklasse die gemäß ISO 19438:2003-11 für den Gesamtabscheidegrad bestimmte Filterklasse ist, wobei das erste Filtermedium (14) eine Biegesteifigkeit gemäß DIN 53864:1978-08 von 10 N*mm² oder mehr aufweist, wobei die Biegesteifigkeit mit einem Biegewinkel von 5° bestimmt wird,
wobei das zweite Filtermedium (18) eine Biegesteifigkeit gemäß DIN 53864:1978-08 von 2,5 N*mm² oder mehr aufweist, wobei die Biegesteifigkeit mit einem Biegewinkel von 5° bestimmt wird, und
wobei der Quotient der Biegesteifigkeit des ersten Filtermediums (14) geteilt durch die Biegesteifigkeit des zweiten Filtermediums (18) 1 oder mehr beträgt.

2. Filtereinsatz (10) nach Anspruch 1, wobei der Quotient aus der Filterklasse des ersten Filtermediums (14) geteilt durch die Filterklasse des zweiten Filtermediums (14) 1,01 oder mehr beträgt.

3. Filtereinsatz (10) nach einem der Ansprüche 1 oder 2, wobei der Abstand zwischen dem erste Bodenelement (20) und dem zweiten Bodenelement (22) in axialer Richtung im Bereich von 0,2*L₁ bis 0,5*L₁ liegt, wobei L₁ die Länge des ersten Filterelements (12) in axialer Richtung ist.

4. Filtereinsatz (10) nach Anspruch 3, wobei der Quotient der Biegesteifigkeit des ersten Filtermediums (14) geteilt durch die Biegesteifigkeit des zweiten Filtermediums (18) 1,1 oder mehr beträgt.

5. Filtereinsatz (10) nach einem der Ansprüche 1 bis 4, wobei das erste Filterelement (12) in axialer Richtung um 10 % oder mehr länger ist als das zweite Filterelement (16).

6. Filtereinsatz (10) nach einem der Ansprüche 1 bis 5, wobei das erste Filterelement (12) und das zweite Filterelement (16) in radialer Richtung voneinander beabstandet sind, so dass der erste Innenraum (28) einen zwischen dem ersten Filterelement (12) und dem zweiten Filterelement (16) angeordneten Zwischenbereich umfasst, wobei der mittlere Abstand im Bereich von 3 bis 20 mm liegt.

7. Filtereinsatz (10) nach einem der Ansprüche 1 bis 6, wobei das Volumen des zweiten Innenraums (30) 0,6*V₁ oder weniger beträgt, wobei V₁ das Volumen des ersten Innenraumes (28) ist.

8. Filtereinsatz (10) nach einem der Ansprüche 1 bis 7, wobei das erste Filterelement (12) eine fluiddurchlässige umlaufende Koaleszerlage (32) zum Agglomerieren von im Fluid dispergierten flüssigen Verunreinigungen umfasst und wobei das erste Bodenelement (20) eine Wasserauslassöffnung (36) umfasst.

9. Filtereinsatz (10) nach einem der Ansprüche 1 bis 8, wobei das zweite Filterelement (16) eine fluiddurchlässige umlaufende Abtrennlage (34) zum Abtrennen von im Fluid vorliegenden flüssigen Verunreinigungen umfasst.

10. Fluidfiltereinrichtung zum Filtern eines Fluids, umfassend:
i) ein Filtergehäuse, und
ii) einen im Filtergehäuse angeordneten Filtereinsatz (10) nach einem der Ansprüche 1 bis 9.

## Claims

1. Filter insert (10) for a fluid filter device, comprising:
a) a circumferential first filter element (12) comprising a folded first filter medium (14),
b) a circumferential second filter element (16) comprising a folded second filter medium (18),
c) a first base element (20) and a second base element (22), and
d) a cover element (24) with a fluid outlet (26),
wherein the first filter element (12), the first base element (20), and the cover element (24) form a first inner chamber (28), said second filter element (16) is arranged in the first inner chamber (28), and the second filter element (16), the second base element (22), and the cover element (24) form a second inner chamber (30),
wherein the distance between the first base element (20) and the second base element (22) in the axial direction is in the range of 0.1*L₁ to 0.6*L₁, wherein L₁ is the length of the first filter element (12) in the axial direction,
wherein the filter insert (10) is designed so that a fluid to be filtered can flow from the outside through the first filter element (12) into the first inner chamber (28), from the first inner chamber (28) through the second filter element (16) into the second inner chamber (30) and out of the second inner chamber (30) through the fluid outlet (26),
wherein the quotient of the accessible filter surface area of the first filter element (12) divided by the accessible filter surface area of the second filter element (16) is greater than 1,
wherein the quotient of the filter rating of the first filter medium (14) divided by the filter rating of the second filter medium (18) equals 1 or more, wherein the filter rating is the filter rating determined according to ISO 19438:2003-11 for the overall separation efficiency, wherein the first filter medium (14) has a bending strength according to DIN 53864:1978-08 of 10 N*mm² or more, wherein the bending strength is determined with a bending angle of 5°,
wherein the second filter medium (18) has a bending strength of 2.5 N*mm² or more according to DIN 53864:1978-08, wherein the bending strength is determined with a bending angle of 5°, and
wherein the quotient of the bending strength of the first filter medium (14) divided by the bending strength of the second filter medium (18) equals 1 or more.

2. Filter insert (10) according to claim 1, wherein the quotient of the filter rating of the first filter medium (14) divided by the filter rating of the second filter medium (14) is 1.01 or more.

3. Filter insert (10) according to either claim 1 or claim 2, wherein the distance between the first base element (20) and the second base element (22) in the axial direction is in the range of 0.2*L₁ to 0.5*L₁, wherein L₁ is the length of the first filter element (12) in the axial direction.

4. Filter insert (10) according to claim 3, wherein the quotient of the bending strength of the first filter medium (14) divided by the bending strength of the second filter medium (18) is 1.1 or more.

5. Filter insert (10) according to any of claims 1 to 4, wherein the first filter element (12) is 10% or more longer in the axial direction than the second filter element (16).

6. Filter insert (10) according to any of claims 1 to 5, wherein the first filter element (12) and the second filter element (16) are spaced apart from one another in the radial direction, so that the first inner chamber (28) comprises an intermediate region arranged between the first filter element (12) and the second filter element (16), wherein the average distance is in the range of 3 to 20 mm.

7. Filter insert (10) according to any of claims 1 to 6, wherein the volume of the second inner chamber (30) is 0.6*V₁ or less, wherein V₁ is the volume of the first inner chamber (28).

8. Filter insert (10) according to any of claims 1 to 7, wherein the first filter element (12) comprises a fluid-permeable circumferential coalescer layer (32) for agglomerating liquid contaminants dispersed in the fluid, and wherein the first base element (20) comprises a water outlet opening (36).

9. Filter insert (10) according to any of claims 1 to 8, wherein the second filter element (16) comprises a fluid-permeable circumferential separation layer (34) for separating liquid contaminants present in the fluid.

10. Fluid filter device for filtering a fluid, comprising:
i) a filter housing, and
ii) a filter insert (10) arranged in the filter housing according to any of claims 1 to 9.

## Revendications

1. Cartouche de filtrage (10) pour un dispositif de filtre à fluide, comprenant :
a) un premier élément de filtre (12) périphérique, comprenant un premier milieu filtrant plié (14),
b) un deuxième élément de filtre (16) périphérique, comprenant un deuxième milieu filtrant plié (18),
c) un premier élément de fond (20) et un deuxième élément de fond (22), et
d) un élément de plafond (24) doté d'une sortie pour fluides (26),
dans lequel le premier élément de filtre (12), le premier élément de fond (20) et l'élément de plafond (24) forment un premier espace intérieur (28), le deuxième élément de filtre (16) étant agencé dans le premier espace intérieur (28), et le deuxième élément de filtre (16), le deuxième élément de fond (22) et l'élément de plafond (24) forment un deuxième espace intérieur (30),
la distance séparant le premier élément de fond (20) et le deuxième élément de fond (22) dans le sens axial étant comprise entre 0,1*L₁ et 0,6*L₁, où L₁ est la longueur du premier élément de filtre (12) dans le sens axial,
la cartouche de filtrage (10) étant conçue de telle sorte qu'un fluide à filtrer arrivant de l'extérieur pénètre dans le premier espace intérieur (28) en passant au travers du premier élément de filtre (12), sort du premier espace intérieur (28) au travers du deuxième élément de filtre (16), pénètre dans le deuxième espace intérieur (30) pour ressortir du deuxième espace intérieur (30) en s'écoulant par la sortie pour fluides (26),
le rapport surface filtrante accessible du premier élément de filtre (12) sur surface filtrante accessible du deuxième élément de filtre (16) étant supérieur à 1,
le rapport classe filtrante du premier milieu filtrant (14) sur classe filtrante du deuxième milieu filtrant (18) étant égal ou supérieur à 1, la classe filtrante étant la classe filtrante déterminée conformément à la norme ISO 19438:2003-11 pour le degré de séparation total, ledit premier milieu filtrant (14) présentant une rigidité en flexion égale ou supérieure à 10 N*mm² ou plus selon la norme DIN 53864:1978-08, la rigidité en flexion étant déterminée avec un angle de flexion de 5°,
le deuxième milieu filtrant (18) présentant une rigidité en flexion égale ou supérieure à 2,5 N*mm² selon la norme DIN 53864:1978-08, ladite rigidité en flexion étant déterminée avec un angle de flexion de 5°, et
le rapport rigidité en flexion du premier milieu filtrant (14) sur rigidité en flexion du deuxième milieu filtrant (18) étant égal ou supérieur à 1.

2. Cartouche de filtrage (10) selon la revendication 1, le rapport classe filtrante du premier milieu filtrant (14) sur classe filtrante du deuxième milieu filtrant (14) étant égal ou supérieur à 1,01.

3. Cartouche de filtrage (10) selon l'une quelconque des revendications 1 ou 2, la distance entre le premier élément de fond (20) et le deuxième élément de fond (22) dans le sens axial étant comprise entre 0,2*L₁ et 0,5*L₁, où L₁ est la longueur du premier élément de filtre (12) dans le sens axial.

4. Cartouche de filtrage (10) selon la revendication 3, le rapport rigidité en flexion du premier milieu filtrant (14) sur rigidité en flexion du deuxième milieu filtrant (18) étant égal ou supérieur à 1,1.

5. Cartouche de filtrage (10) selon l'une quelconque des revendications 1 à 4, la longueur du premier élément de filtre (12) dans le sens axial étant supérieure de 10 % ou plus à la longueur du deuxième élément de filtre (16).

6. Cartouche de filtrage (10) selon l'une quelconque des revendications 1 à 5, le premier élément de filtre (12) et le deuxième élément de filtre (16) étant espacés l'un de l'autre dans le sens radial, de sorte que le premier espace intérieur (28) comprend une zone intermédiaire agencée entre le premier élément de filtre (12) et le deuxième élément de filtre (16), la distance moyenne étant comprise entre 3 et 20 mm.

7. Cartouche de filtrage (10) selon l'une quelconque des revendications 1 à 6, le volume du deuxième espace intérieur (30) étant égal ou inférieur à 0,6*V₁, où V₁ est le volume du premier espace intérieur (28).

8. Cartouche de filtrage (10) selon l'une quelconque des revendications 1 à 7, le premier élément de filtre (12) comprenant un banc de coalescence périphérique perméable aux fluides (32) pour agglomérer les impuretés en suspension dans le fluide, et le premier élément de fond (20) comprenant un orifice de sortie de l'eau (36).

9. Cartouche de filtrage (10) selon l'une quelconque des revendications 1 à 8, le deuxième élément de filtre (16) comprenant une couche de séparation périphérique perméable aux fluides (34) pour séparer les impuretés présentes dans le fluide.

10. Dispositif de filtre à fluide destiné à filtrer un fluide, comprenant :
i) un carter de filtre, et
ii) une cartouche de filtrage (10) selon l'une quelconque des revendications 1 à 9, agencée dans le carter de filtre.
